**Europäisches Patentamt**

**European Patent Office**

**Office européen des brevets**

(19)

(11) Veröffentlichungsnummer: **0 054 821**
A1

# EUROPÄISCHE PATENTANMELDUNG

(21) Anmeldenummer: **81110212.8**

(22) Anmeldetag: **07.12.81**

(51) Int. Cl.³: **G 01 P 3/36, G 01 C 19/64**

(30) Priorität: **11.12.80 DE 3046622**

(43) Veröffentlichungstag der Anmeldung: **30.06.82**
**Patentblatt 82/26**

(84) Benannte Vertragsstaaten: **DE FR GB IT**

(71) Anmelder: **TELDIX GmbH, Grenzhöfer**
**Weg 36 Postfach 105608, D-6900 Heidelberg 1 (DE)**

(72) Erfinder: **Demtröder, Wolfgang, Prof. Dr. rer. nat., Am**
**Harzhübel 80, D-6750 Kaiserslautern (DE)**
Erfinder: **Wickert, Karl, Dipl.-Phys., Schubertstrasse 28,**
**D-6750 Kaiserslautern (DE)**
Erfinder: **Baron, Klaus Uwe, Dr. rer. nat.,**
**Turnerstrasse 11, D-6900 Heidelberg (DE)**

(74) Vertreter: **Kammer, Arno, Dipl.-Ing., TELDIX GmbH**
**Postfach 10 56 08 Grenzhöfer Weg 36,**
**D-6900 Heidelberg 1 (DE)**

(54) **Einrichtung zum Messen von Drehbewegungen.**

(57) Gegenstand der Anmeldung ist eine Einrichtung zum Messen von Drehbewegungen durch Nutzung des Sagnac-Effekts, bei der zwei gegenläufig in einem aus mehreren Windungen einer Lichtleitfaser gebildeten Umlaufpfad umlaufende, linear polarisierte Modulationseinrichtungen zur periodischen Beeinflussung der Wellen vorgesehen sind. Die sich aus der Überlagerung ergebende Welle wird einer Auswerteschaltung zur Auswertung der Phasenmodulation zugeführt. Wenigstens ein Teil der Windungen der Lichtleitfaser wird zur Modulation über wenigstens einen Teil des Umfangs einem sich periodisch ändernden Magnetfeld ausgesetzt. Außerdem wird in den optischen Weg der Wellen – und zwar bezogen auf die beiden Teilwellen nicht reziprok – ein Bauelement eingefügt, das eine von der Polarisationsrichtung abhängige Phasenverschiebung der Wellen erzeugt. Damit kann ein Phasendetektor zur Auswertung der hierbei entstehenden Phasenmodulation des Überlagerungssignals verwendet werden.

Heidelberg, 4. Dezember 1981
PT-Ka/Ba        E-474 Ausl.

## Einrichtung zum Messen von Drehbewegungen

Die Erfindung betrifft eine Einrichtung zum Messen von Drehbewegungen durch Nutzung des Sagnac-Effekts, bei der zwei gegenläufig in einem aus mehreren Windungen einer Lichtleitfaser gebildeten Umlaufpfad umlaufende, linearpolarisierte elektromagnetische Wellen, insbesondere Licht, überlagert werden, wobei im Umlaufpfad eine magneto-optische Modulationseinrichtung zur periodischen Beeinflussung der Wellen vorgesehen ist und die sich aus der Überlagerung ergebende Welle einer Auswerteschaltung zur Auswertung der Phasenmodulation zugeführt wird.

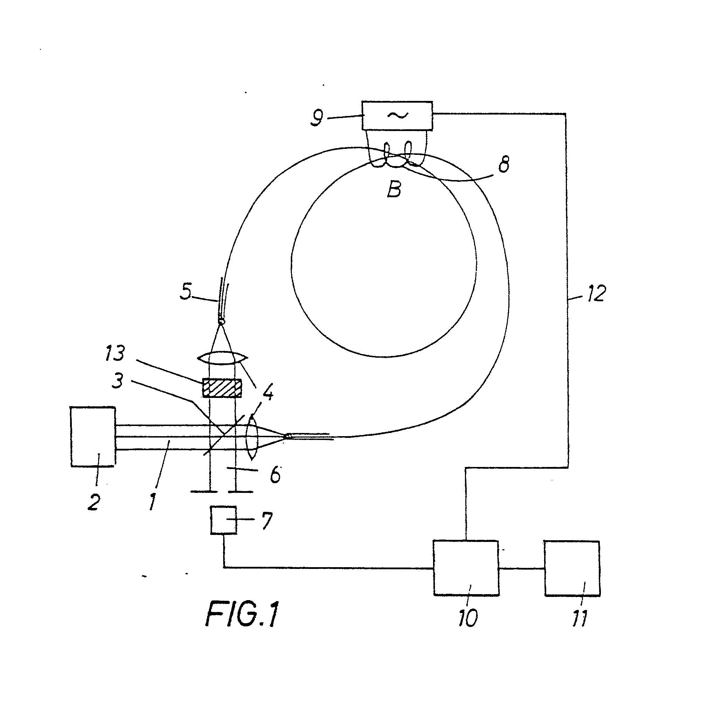

Eine solche Einrichtung ist aus der Zeitschrift SPIE Vol.157 Laser Interatial Rotation Sensor (1978), Seiten 131-136, insbesondere Seite 135, Figur 1, mit zugehöriger Beschreibung auf Seiten 132 und 133, bekannt.

Bei der bekannten Einrichtung wird das linear polarisierte Licht eines Lasers über einen Strahlteiler geführt. Der eine Strahl gelangt dann über einen elektro-optischen oder magneto-optischen Phasenmodulator zum einen Ende der Lichtleitfaser, durchläuft diese und eine an deren anderem Ende angeordnete Einrichtung, die die Polarisationsebene um $90^{\circ}$ dreht. Der andere Teilstrahl durchläuft den beschriebenen Weg in umgekehrter Richtung, wird also zuerst in der Polarisationsebene um 90° gedreht und nach Faserdurchlauf moduliert. Unter Vernachlässigung der polarisationsabhängigen, polarisationsändernden Eigenschaften der Faser stimmt die Polarisationsebene beider Teilstrahlen bei der nachfolgenden Überlagerung zwar überein, jedoch erfolgte die Modulation der beiden Teilstrahlen bei 90° zueinander senkrecht stehenden Polarisationsebenen. Die durch die Überlagerung erhaltene Welle wird dann einem Phasendetektor zugeführt. Bei Drehung der gesamten, auch als Sagnac-Interferometer bezeichneten Einrichtung ist dem demodulierten Signal ein durch die Drehung bedingtes Signal überlagert, das ausgewertet wird. Diese Modulationstechnik wird angewendet, um auch noch kleine, durch die Drehung bedingte Phasenverschiebungen besser messen zu können.

Die der Erfindung zugrunde liegende Aufgabe besteht darin, eine einfache Einrichtung der eingangs genannten Art zu schaffen, die ebenfalls noch kleine Drehgeschwindigkeiten sensieren kann, jedoch kleinere Fehlereinflüsse aufweist.

Diese Aufgabe wird erfindungsgemäß durch die im Anspruch 1 angegebenen Merkmale gelöst.

Bei der Erfindung kommt somit ein magneto-optischer Modulator zur Anwendung, bei dem das zur Lichtleitung vorhandene Fasermaterial zumindest teilweise zur Modulation mit ausgenutzt wird. Das Fasermaterial, bestehend aus Material (z.B. synth. Quarz), das unter dem Einfluß eines Magnetfeldes den sogenannten Faraday-Effekt zeigt, dreht die Polarisationsebene der Wellen in Abhängigkeit von der Stärke des Magnetfeldes und zwar nach der Formel

$$\theta_F = V \, L \, B \, \cos \alpha$$

wobei $\theta$     die Winkeldrehung der Polarisationsebene

      V     die Verdet-Konstante

      L     die Materiallänge im Feld

B    die Induktion

α    der Winkel zwischen Lichtrichtung und
     Feldrichtung

ist. Hieraus ergibt sich, daß für die beiden entgegengesetzt umlaufenden Wellen sich unterschiedlich gerichtete
Drehungen der Polarisationsebene ergeben. Die Möglichkeit,
Lichtleitfasern zur Modulation einem Magnetfeld auszusetzen, ist an sich aus der DE-OS 29 06 870 bekannt.

Eine Phasenmodulation des Interferenzsignals, trotz Anwendung linear polarisierten Lichts (und damit der Vermeidung der Nachteile von zirkular polarisiertem Licht) erhält man gemäß der Erfindung dadurch, daß man in den optischen Weg beider Wellen, bezogen auf die beiden Teilwellen
nichtreziprok, z.B. am einen Ende der Lichtleitfaser, ein
Bauelement einfügt, das eine von der Polarisationsrichtung
abhängige Phasenverschiebung der Wellen erzeugt, z.B. einen
anisotropen Kristall (KDP-Kristall). Die eine Teilwelle
durchläuft zuerst den Kristall (und dann die Faser) und erfährt damit im Kristall eine von der Polarisationsrichtung
abhängige Phasenverschiebung; die andere Teilwelle durchläuft dagegen zuerst die Faser, wird in dieser moduliert und
dann dem Kristall zugeführt. Da sie eine andere Polarisationsrichtung hat, erfährt sie dort eine andere und zudem
- wegen der Modulation der Polarisationsrichtung - modulierte Phasenverschiebung. Das Interferenzsignal ist dann ebenfalls moduliert.

Die geschilderte Einrichtung hat den Vorteil, linear-polarisiertes Licht zu verwenden, dessen Polarisationsebene für
beide Teilwellen beim Eintritt in die Faser gleich ist. Hierdurch werden Unterschiede im Polarisationsverhalten der Faser für beide Teilwellen minimalisiert. Die durch den Faraday-Effekt bewirkte Modulation der Polarisationsrichtungen
führt im KDP-Kristall zu einer verstärkten Phasenmodulation, wodurch diese Anordnung besonders empfindlich wird.

Anhand der Zeichnung wird ein Ausführungsbeispiel der Erfindung erläutert. Es zeigt

Fig. 1 - den Aufbau eines Ausführungsbeispiels
der Erfindung.

In Figur 1 wird der Strahl 1 eines Lasers 2 an einem Strahl-Teiler 3 geteilt und die Teilstrahlen werden über Optiken 4 einer aus mehreren Windungen bestehenden Lichtleitfaser 5 zugeführt. Die beiden Teilstrahlen werden nach Durchlaufen der Faser 5 in entgegengesetzter Richtung mittels des Teilers 3 wieder zu einem Strahl 6 überlagert und über eine Blende einem Detektor 7, der daraus ein entsprechendes elektrisches Signal erzeugt, zugeführt. Die Windungen der Lichtleitfaser 5 sind hier von den Windungen einer Wicklung 8 umfaßt, die mit einem Wechselstromgenerator 9 verbunden ist. Das mit dem Licht etwa gleich- bzw. entgegengesetzt laufende Magnetfeld der Wicklung beeinflußt bei Verwendung von linear polarisiertem Licht die Polarisationsrichtungen unterschiedlich.

Zusätzlich ist noch vor dem einen Faseranfang ein KDP-Kristall eingefügt. Da im Kristall der Brechungsindex n von der Polarisationsrichtung $\beta$ (gemessen gegen die optische Achse) abhängt,

$$n = f(\beta)$$

ruft er eine von der Polarisationsrichtung $\beta$ abhängige Phasenverschiebung $\Delta\phi$

$$\Delta\phi = f(\beta)$$

hervor. Im phasenempfindlichen Gleichrichter 10 wird die dann im Interferenzsignal vorhandene Phasenmodulation ausgewertet,

**TELDIX**
HEIDELBERG

0054821
E-474 Ausl.

wozu dem Gleichrichter das Signal des Generators 9 über die Referenzleitung 12 als Referenzsignal zugeführt wird. Das ausgewertete Signal wird mittels des Geräts 11 in bekannter Weise geeignet angezeigt.

Durch die erfindungsgemäße Kombination der beiden kennzeichnenden Merkmale in Verbindung mit den Merkmalen des Oberbegriffs wird eine Einrichtung geschaffen, die zu einer verstärkten Phasenmodulation führt, so daß die Einrichtung entweder empfindlicher ist oder mit einem kleineren Modulationsstrom auskommt.

0054821
E-474 Ausl.

Patentansprüche

1. Einrichtung zum Messen von Drehbewegungen durch Nutzung des Sagnac-Effekts, bei der zwei gegenläufig in einem aus meheren Windungen einer Lichtleitfaser gebildeten Umlaufpfad umlaufende, linearpolarisierte elektromagnetische Wellen, insbesondere Licht, überlagert werden, wobei im Umlaufpfad eine magneto-optische Modulationseinrichtung zur periodischen Beeinflussung der Wellen vorgesehen ist und die sich aus der Überlagerung ergebende Welle einer Auswerteschaltung zur Auswertung der Phasenmodulation zugeführt wird, dadurch gekennzeichnet, daß wenigstens ein Teil der Windungen der Lichtleitfaser (5) über wenigstens einen Teil des Umfangs dem sich periodisch ändernden Magnetfeld der Modulationseinrichtung (8, 9) ausgesetzt ist und daß in den optischen Weg der Wellen – und zwar bezogen auf die beiden Teilwellen nicht reziprok – ein Bauelement (13) eingefügt ist, das eine von der Polarisationsrichtung abhängige Phasenverschiebung der Wellen erzeugt.

2. Einrichtung nach Anspruch 1, dadurch gekennzeichnet, daß das Bauelement (13) am einen Ende der Lichtleitfaser (5) angeordnet ist.

3. Einrichtung nach Anspruch 1 oder 2, dadurch gekennzeichnet, daß das Bauelement ein anisotroper Kristall (13) ist.

TELDIX
HEIDELBERG

0054821

FIG.1

Europäisches Patentamt

**EUROPÄISCHER RECHERCHENBERICHT**

0054821

Nummer der Anmeldung

EP 81 11 021

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>FR - A - 2 446 481</u> (MAX-PLANCK-GES.)<br><br>* Seite 8, Zeile 32 - Seite 9, Zeile 21; Figuren 1,2 * | 1 |
| A | <u>US - A - 3 867 034</u> (ARONOWITZ)<br><br>* Spalte 7, Zeilen 33-60; Figur 2 * | 1 |
| AD | <u>DE - A - 2 906 870</u> (MAX-PLANCK-GES.)<br><br>* Seite 13, Zeilen 1-21; Figuren * | 1 |
| A | SIEMENS FORSCH. & ENTWICKL. BE-RICHTE, Band 9, Nr. 1, 1980, Seiten 16-25<br>Berlin, DE.<br>G. SCHIFFNER: "Lichtleitfaser-Rotationssensor auf der Grund-lage des Sagnac-Effekts" | 1 |

**KLASSIFIKATION DER ANMELDUNG (Int. Cl.)**

G 01 P 3/36
G 01 C 19/64

**RECHERCHIERTE SACHGEBIETE (Int Cl.³)**

G 01 P
G 01 C

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde lie-gende Theorien oder Grund-sätze
E: älteres Patentdokument, das jedoch erst am oder nach dem Anmeldedatum veröffentlicht worden ist
D: in der Anmeldung angeführtes Dokument
L: aus andern Gründen ange-führtes Dokument

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-03-1982 | HANSEN |

EPA form 1503.1  06.78